# EUROPÄISCHE PATENTSCHRIFT

(11) **EP 1 157 225 B1**
(45) Veröffentlichungstag und Bekanntmachung des Hinweises auf die Patenterteilung: **31.07.2002**
(21) Anmeldenummer: 00907639.9
(22) Anmeldetag: 26.02.2000
(51) Int. Cl.: F16H 61/12

(54) **GETRIEBE- UND MOTORSTEUERUNG FÜR EIN KRAFTFAHRZEUG MIT EINEM AUTOMATGETRIEBE**
TRANSMISSION/ENGINE CONTROL SYSTEM FOR A MOTOR VEHICLE WITH AUTOMATIC TRANSMISSION
COMMANDE DE TRANSMISSION/MOTEUR POUR AUTOMOBILE A TRANSMISSION AUTOMATIQUE

(30) Priorität: 04.03.1999 DE 19909496
(43) Veröffentlichungstag der Anmeldung: 28.11.2001
(73) Patentinhaber: ZF FRIEDRICHSHAFEN Aktiengesellschaft, 88038 Friedrichshafen (DE)
(72) Erfinder: BEK, Manfred, D-88069 Tettnang (DE)
(86) Internationale Anmeldenummer: EP0001618
(87) Internationale Veröffentlichungsnummer: WO0052360

(56) Entgegenhaltungen:
- WO-A-93/13340
- DE-A- 3 827 248
- DE-A- 19 643 812
- DE-C- 4 422 257
- GB-A- 2 090 926
- GB-A- 2 315 132
- JP-A- 3 061 760
- JP-A- 5 322 031

## Beschreibung

Die Erfindung betrifft eine Getriebe-/Motorsteuerung für ein Kraftfahrzeug mit einem Automatgetriebe nach der im Oberbegriff des Patentanspruches 1 näher definierten Art.

Bei aus dem Stand der Technik bekannten Getriebesteuerungen für ein Automatgetriebe eines Kraftfahrzeuges mit einer elektronischen Schaltung erfolgt die Aktivierung einer von einem Fahrer gewünschten Getriebeschaltstellung über die Betätigung eines Wählhebels durch den Fahrer, wobei die Position des Wählhebels von einer Positionserkennungseinrichtung detektiert wird und ein entsprechendes Signal an eine elektronische Getriebesteuerung übertragen wird.

Tritt eine Störung einer Signalübertragung in dem Übertragungsweg zwischen dem Wählhebel und den Steuermitteln des Automatgetriebes auf, wird eine Notfahreinrichtung aktiviert, um das Automatgetriebe in einem hydraulischen Notfahrprogramm zu betreiben. Eine Störung kann durch einen Ausfall eines CAN(Controller Area Network)-Datenbusses oder eines elektronischen Steuergerätes, wie beispielsweise einer elektronischen Getriebesteuerung, ausgelöst werden.

Bei einer Störung ist infolge des dann aktivierten Notfahrprogramms bis zum Abstellen des Motors keine Änderung des Fahrprogrammes in dem Automatgetriebe mehr möglich. Üblicherweise wird im Notfahrprogramm eine Gangstufe hydraulisch festgehalten. Kritisch ist eine eventuell von dem Fahrer herbeigeführte Veränderung der Position des Wählhebels, da einerseits die elektrohydraulischen Aktuatoren für die Kupplungsansteuerung elektrisch nicht mehr angesteuert werden können und andererseits die elektrische Positionserkennung nicht mehr übertragen werden kann.

Letzteres ist insbesondere problematisch für ein Automatgetriebe mit einer ausschließlich elektrischen Verbindung zwischen dem Wählhebel und dem Getriebe.

Beispielsweise beschreibt die DE-OS 196 43 812 ein Parksperrensystem für ein Automatgetriebe, bei dem der Wählhebel von dem Getriebe mechanisch komplett entkoppelt ist und die Steuerbefehle des Wählhebels ausschließlich über die Elektronische Getriebesteuerung weiterverarbeitet werden.

Die DE-PS 44 22 257 beschreibt eine Fahrstufenwähleinrichtung für ein Automatgetriebe, bei dem die Fahrstufen "D", "N" und "R" ausschließlich von einem durch die Elektronische Getriebesteuerung gesteuerten Elektromotor geschaltet werden, und bei dem nur in der Fahrstufe "P" eine mechanisch-hydraulische Wirkverbindung zwischen Wählhebel und Getriebe wirksam wird.

Wenn beim Auftreten der Störung der Signalübertragung eine Gangstufe für Vorwärtsfahrt eingelegt ist, und der Fahrer über den Wählhebel den Befehl zum Wechsel in den Rückwärtsgang gibt, kann dieser Schaltbefehl nicht an die Getriebesteuerung übermittelt und ausgeführt werden, und
das Fahrzeug fährt beim Anfahren nachteilhafterweise entgegen der Fahrererwartung nach vorne.

Um dem Fahrer anzuzeigen, daß sich das Automatgetriebe im Notfahrprogramm befindet, weisen aus dem Stand der Technik bekannte Kraftfahrzeuge im Bereich der Armaturen eine Warnanzeige oder ein Leuchtelement zum Anzeigen der Störung auf. Des weiteren ist es bekannt, eine Aktivierung des Notfahrprogramms dem Fahrer durch das Verlöschen der im Normalzustand leuchtenden Positionsanzeige, die mit der Elektronischen Getriebesteuerung in Verbindung steht, im Armaturenbereich anzuzeigen.

Nachteilig ist dabei jedoch, daß diese Warnanzeige nur einen allgemeinen Notfahrbetrieb anzeigen, so daß der Fahrer fälschlicherweise von der Durchführbarkeit einer Fahrtrichtungsänderung ausgehen kann, wenngleich sich das Kraftfahrzeug nach Verstellen des Wählhebels zum Ändern des Fahrprogramms für Vorwärtsfahrt in das Fahrprogramm für Rückwärtsfahrt beim Anfahren in die "falsche" Richtung bewegt.

Bei einer starken Betätigung des Gaspedals kann dann das Kraftfahrzeug auf ein sich in der Umgebung befindendes Hindernis auffahren, da in solch einer Situation die Reaktionszeit, welche dem Fahrer zum Erfassen der Situation zur Verfügung steht, zu kurz sein kann, um einen Unfall durch Betätigen der Fahrzeugbremse zu vermeiden.

So ist in der JP 05322031 A eine Gangwähleinrichtung für ein Automatgetriebe bekanntgeworden, bei der die Wählwelle des Getriebes über einen Stellmotor betätigt wird. Der Stellmotor weist eine elektrische Wirkverbindung zum Wählhebel auf. Zur elektrischen Erkennung der Stellung des Stellmotors und der Wählwelle sind jeweils Sensoren vorgesehen. Die jeweiligen Gangpositionen am Getriebe werden also elektromotorisch geschaltet. Defekte an der (mechanischen) Verbindung von Stellmotor zur Getriebewählwelle, am Stellmotor selbst, am Stellmotor-Positionssensor oder am Getriebe-Positionssensor werden über die Plausibilität von Wählhebelstellung und Stellmotorbewegung erkannt. Im Fehlerfall wird der Fahrer über eine Störanzeige aufgefordert, das Fahrzeug anzuhalten. Bei Fahrzeugstillstand wird dann ein Diagnoseprogramm durchgeführt, wobei der Fahrer die Position P eingelegt und die Bremse betätigt haben muß. Über ein Display wird der Fahrer anschließend über den Fehlerort informiert und ob eine Weiterfahrt unmöglich ist oder ob er - bei minderschweren Fehlern - schnellstmöglich selber eine Werkstatt aufsuchen soll.

Nachteilig ist hierbei jedoch - wie auch bei anderen bekannten Warneinrichtungen, die nur ein aktiviertes Notprogramm des Automatgetriebes optisch anzeigen -, daß diese Störanzeige beim Auftreten des Fehlers nur eine allgemeine Störung anzeigt. Der Fahrer kann fälschlicherweise von der Durchführbarkeit einer Fahrtrichtungsänderung ausgehen, wenngleich sich das Kraftfahrzeug - je nach Fehlerart - nach Verstellen des Wählhebels zum Ändern der Fahrtrichtung beim Anfahren in die "falsche" Richtung bewegen kann. In der Praxis hat sich gezeigt, daß der Fahrer die optische Aufforderung, das Fahrzeug anzuhalten, nicht zwangsläufig mit einem Risiko beim Rangieren im Zuge dieses Anhaltens in Verbindung bringt. Bei den Bemühungen, das Fahrzeug möglichst sicher aus dem fließenden Verkehr zu entfernen, wird der Fahrer situativ durchaus einen rückwärtigen Einparkvorgang versuchen. Detaillinterne Informationen über den tatsächlichen Fehler erhält der Fahrer bei der Gangwähleinrichtung der JP 05322031 A erst nach dem Abstellen des Fahrzeugs und erfolgter Abarbeitung des Diagnoseprogramms. Zu keiner Zeit gibt die dort offenbarte Störanzeige dem Fahrer einen Hinweis auf die Problematik bei einer Fahrtrichtungsänderung.

Der vorliegenden Erfindung liegt die Aufgabe zugrunde, eine Getriebe-/Motorsteuerung für ein Kraftfahrzeug mit einem Automatgetriebe und elektrischer Positionserkennung der Wählhebelstellung zur Verfügung zu stellen, mit der bei einer Störung der Signalübertragung zwischen Wählhebel und Getriebe und bei aktiviertem Notfahrprogramm eine Unfallgefahr durch ungewolltes Anfahren in die "falsche" Fahrtrichtung vermieden wird oder zumindest ein Anfahren mit nur geringer Beschleunigung möglich ist.

Erfindungsgemäß wird diese Aufgabe mit einer Getriebe-/Motorsteuerung gemäß den kennzeichnenden Merkmalen der Patentansprüche 1, 2, 3 oder 4 gelöst.

Wenn die erfindungsgemäße Getriebe-/Motorsteuerung gemäß dem Patentanspruch 1 ausgestaltet ist, ist in vorteilhafterweise gewährleistet, daß bei einer Störung einer Signalübertragung von der elektrischen Positionserkennungseinrichtung des Wählhebels an Steuermittel des Automatgetriebes, bei welcher ein Fahrtrichtungswechsel nicht durchführbar ist, nur ein langsames Anfahren des Kraftfahrzeuges möglich ist.

Dies ist besonders dann von Vorteil, wenn der Fahrer des Kraftfahrzeuges meint, über eine Betätigung des Wählhebels eine Fahrtrichtungsänderung, z.B. von Vorwärtsfahrt in Rückwärtsfahrt, herbeigeführt zu haben, wobei jedoch tatsächlich aufgrund der Störung keine Änderung der eingestellten Gangstufe erfolgte. Mit der erfindungsgemäßen Lösung fährt nämlich das Kraftfahrzeug nicht mit der gesamten zur Verfügung stehenden Motorleistung an, sondern nur mit einer geringen Motorleistung, so daß der Fahrer die tatsächliche Fahrtrichtung erkennen kann und ausreichend Reaktionszeit hat, um einen Schaden an seinem Kraftfahrzeug zu vermeiden.

Alternativ dazu kann die erfindungsgemäße Getriebe-/Motorsteuerung gemäß Patentanspruch 2 ausgebildet sein, wobei mit dieser Lösung ebenfalls auf einfache Art und Weise gewährleistet ist, daß bei einer Störung der Signalübertragung von der elektrischen Positionserkennungseinrichtung des Wählhebels an Steuermittel des Automatgetriebes, bei welcher keine Fahrtrichtungsänderung durchführbar ist, ein Fahrer nicht oder nur mit einer verringerten Beschleunigung bzw. Fahrzeuggeschwindigkeit mit dem Kraftfahrzeug in die für ihn "falsche" Fahrtrichtung anfährt.

Durch die Aktivierung der Fahrzeugbremse kann in vorteilhafter Weise ein Unfall vermieden werden. Dabei kann die Fahrzeugbremse von einer getriebeunabhängigen Rechnereinheit derart aktiviert werden, daß ein Anfahren des Kraftfahrzeuges generell verhindert wird oder nur sehr langsam möglich ist.

Mit der erfindungsgemäßen Lösung gemäß Patentanspruch 3, welche für sich alleine oder in Kombination mit einer der in den Patentansprüchen 1 und 2 beschriebenen Lösungen vorgesehen sein kann, wird der Vorteil erzielt, daß dem Fahrer eines Kraftfahrzeuges durch den blockierten Wählhebel angezeigt wird, daß eine Fahrtrichtungsänderung durch Wechsel des Fahrprogramms in dem Automatgetriebe nicht möglich ist und beispielsweise eine sich an eine Vorwärtsfahrt anschließende Rückwärtsfahrt nicht durchführbar ist. Diese erfindungsgemäße Lösung gibt dem Fahrer eine eindeutige Rückmeldung, daß eine Änderung der Fahrtrichtung nicht möglich ist.

Eine konstruktiv einfache und kostengünstige Lösung stellt die optische oder akustische Hinweiseinrichtung gemäß Patentanspruch 4 dar, die vorzugsweise im Bereich der Armaturen angeordnet ist.

In einer Weiterbildung der Getriebe-/Motorsteuerung kann es vorgesehen sein, daß die Warneinrichtung wenigstens für eine applizierbare Zeit aktiviert ist.

Damit wird dem Fahrer in vorteilhafter Weise zunächst eindeutig signalisiert, daß eine Störung vorliegt und ein Fahrtrichtungswechsel des Kraftfahrzeuges nicht möglich ist. Nach Ablauf der applizierbaren Zeit können die durch die Warneinrichtung ausgelösten motorseitigen oder bremsenseitigen Eingriffe teilweise zurückgenommen werden, so daß eine größere Fahrzeugmobilität und eine eingeschränkte Weiterfahrt in eine Werkstatt in einem hydraulischen Notfahrprogramm des Automatgetriebes gewährleistet ist, ohne das Sicherheitsrisiko für den Fahrer allzu sehr zu erhöhen.

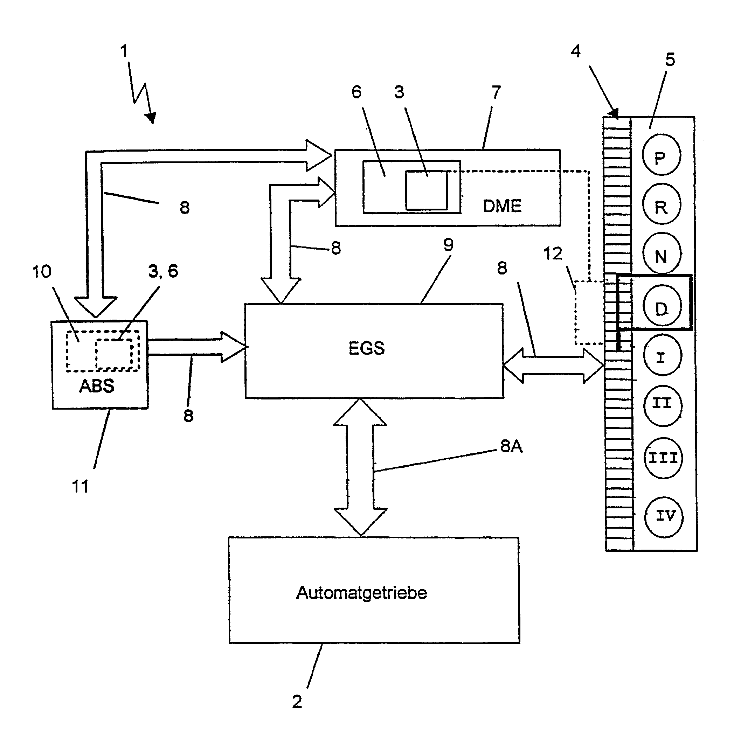

Weitere Vorteile und Weiterbildungen der Erfindung ergeben sich aus den Unteransprüchen und aus dem nachfolgend anhand der Zeichnung prinzipmäßig beschriebenen Ausführungsbeispiel.

Die einzige Figur der Zeichnung zeigt ein äußerst schematisiertes Blockschaltbild einer Getriebe-/Motorsteuerung 1 für ein Automatgetriebe 2 eines nicht näher dargestellten Kraftfahrzeuges, wobei eine Warneinrichtung 3 zum Anzeigen einer Störung einer Signalübertragung von einer elektrischen Positionserkennungseinrichtung 4 eines Wählhebels 5 an nicht näher dargestellte Steuermittel des Automatgetriebes 2 vorgesehen ist. Über den Wählhebel 5 können mehrere Getriebeschaltstellungen P, R, N, D, I, II, III, IV von einem Fahrer angewählt und elektrisch geschaltet werden.

Die Warneinrichtung 3 ist mit einem Programmodul einer getriebeunabhängigen Rechnereinheit 6 ausgebildet, welche im Notfahrbetrieb des Automatgetriebes 2 bei Erkennen einer Fahrzeuggeschwindigkeit, welche kleiner als ein Grenzwert ist, an ein Programmodul einer Motorsteuerung 7, welche vorliegend mit einer Digitale Motorelektronik (DME) ausgebildet ist, ein maximal zulässiges Motormoment und/oder eine maximal zulässige Motordrehzahl für den Notfahrbetrieb ausgibt. Die getriebeunabhängige Rechnereinheit ist bei der in der Figur gezeigten Ausführung gleichzeitig ein Rechner der Motorsteuerung 7.

In einer anderen, nicht dargestellten Ausgestaltung kann die getriebeunabhängige Rechnereinheit 6 der Warneinrichtung 3 selbstverständlich auch als separates Steuergerät ausgeführt sein.

Das Automatgetriebe 2 ist über eine Signalleitung 8A mit einem in der Figur als "EGS" bezeichneten elektronischen Getriebesteuergerät 9 verbunden, insbesondere zur Übermittlung der getriebeinternen Sensorsignale und der elektrischen Steuerbefehle für die hydraulische Getriebesteuerung. Die Positionserkennungseinrichtung 4 ist über einen CAN(Controller Area Network)-Datenbus 8 mit dem Getriebesteuergerät 9 verbunden. Zur Kommunikation mit anderen Steuereinrichtungen des Fahrzeugs, wie z.B. einer Steuereinrichtung 10 einer Fahrzeugbremse, ist das elektronische Getriebesteuergerät 9 mit diesen ebenfalls über den CAN-Datenbus 8 verbunden.

In einer alternativen Ausführungsform kann die elektrische Signalübertragung zwischen den elektronischen Steuergeräten 6, 7, 9, 10 untereinander und zur Positionserkennungseinrichtung 4 über einzelne Kabel erfolgen.

Eine Störung der Signalübertragung von der Positionserkennungseinrichtung 4 zu den Steuermitteln des Automatgetriebes 2 kann durch eine Störung oder einen Ausfall des elektronischen Getriebesteuergerätes 9 und/oder des CAN-Datenbusses 8 und/oder der Positionserkennungseinrichtung 4 ausgelöst werden. Der Notfahrbetrieb wird dabei von dem elektronischen Getriebesteuergerät 9 ausgelöst. Die nicht näher dargestellte hydraulische Steuereinrichtung in dem Automatgetriebe 2 stellt das Notfahrprogramm ein, so daß das Kraftfahrzeug zumindest eingeschränkt weiter gefahren werden kann.

Die Warneinrichtung 3 erkennt den Notfahrbetrieb durch ein Fehlen eines einen Normalbetrieb anzeigenden Ausgangssignales des elektronischen Getriebesteuergerätes 9.

Wenn der Fahrer des Kraftfahrzeuges durch Verstellen des Wählhebels 5 über die Positionserkennungseinrichtung 4 einen Befehl zum Wechsel der Fahrtrichtung oder zum Wechsel des aktuellen Fahrprogrammes, beispielsweise vom "D" nach "I", abgibt, wird bei normaler Funktionsweise der Getriebe-/Motorsteuerung 1 die angewählte Fahrtrichtung oder das angewählte Fahrprogramm in dem Automatgetriebe 2 eingelegt.

Bei einer Störung in der Signalübertragung und Notfahrbetrieb kann eine Veränderung der Position des Wählhebels 5 nicht mehr erkannt werden. Wenn der Fahrer nun den Wählhebel 5 von einer Position für Vorwärtsfahrt D in eine Stellung R, welche der Rückwärtsfahrt zugeordnet ist, verschiebt, wird das Kraftfahrzeug jedoch weiterhin in einem Fahrprogramm für Vorwärtsfahrt betrieben.

Die Warneinrichtung 3 gibt hier ein maximal zulässiges Motormoment und/oder eine maximal zulässige Motordrehzahl an die Motorsteuerung 7 aus, damit das Kraftfahrzeug nur mit stark verminderter Beschleunigung und limitierter Zugkraft bzw. mit einer geringen Geschwindigkeit nach vorne anfahren kann. Der Wert des maximal zulässigen Motormomentes oder der maximal zulässigen Motordrehzahl ist entsprechend applizierbar, wobei er im vorliegenden Ausführungsbeispiel derart vorgesehen ist, daß sich das Fahrzeug in Kriechgeschwindigkeit, z.B. mit 8 km/h bewegen kann.

Eine weitere Möglichkeit zur Begrenzung der Fahrzeuggeschwindigkeit oder der Beschleunigung beim Anfahren des Kraftfahrzeuges bei einer Störung der Signalübertragung ist in einer weiteren, in der Figur gestrichelt dargestellten Ausführungsform ersichtlich, wobei die Warneinrichtung 3 mit ihrer getriebeunabhängigen Rechnereinheit 6 an ein Programmodul einer Steuereinrichtung 10 einer Fahrzeugbremse ein Signal zur Aktivierung der Fahrzeugbremse (nicht dargestellt) ausgibt. Die getriebeunabhängige Rechnereinheit 6 ist dabei in einen Rechner der Steuereinrichtung 10 der Fahrzeugbremse, welche in der gezeigten Ausführung Teil eines ABS-Systems 11 ist, integriert.

Mit dieser Ausführungsvariante ist ebenfalls gewährleistet, daß das Kraftfahrzeug mit verringerter Beschleunigung anfährt oder nur mit einer geringen Fahrzeuggeschwindigkeit bewegt werden kann. Es liegt jedoch im Ermessen des Fachmannes, den Bremseingriff durch die Fahrzeugbremse derart vorzusehen, daß ein Anfahren des Fahrzeuges generell verhindert wird.

In einer weiteren, in der Figur strichpunktiert dargestellten Ausführungsvariante ist vorgesehen, daß die Warneinrichtung 3 mit einer Arretierungseinrichtung 12 zum Blockieren des Wählhebels 5 bei Eintritt der Störung in seiner aktuellen Stellung ausgebildet ist. Damit kann der Fahrer den Wählhebel 5 nicht mehr betätigen und stellt fest, das ein Wechsel des Fahrprogramms nicht mehr möglich ist.

Die Arretierungseinrichtung 12 ist vorliegend als ein stromführend oder als ein stromlos sperrender Magnet ausgebildet, der den Wählhebel 6 in seiner aktuellen Stellung hält.

Im obigen Ausführungsbeispiel ist die Funktionsweise der erfindungsgemäßen Getriebe-/Motorsteuerung bei einer Signalübertragungsstörung und Auslösung des Notfahrprogramms während einer Vorwärtsfahrt beschrieben. Selbstverständlich ist sie jedoch auch analog bei einer Signalübertragungsstörung und Auslösung des Notfahrprogramms während einer Rückwärtsfahrt wirksam.

In diesem Fall blockiert z.B. die Arretierungseinrichtung 12 den Wählhebel in der Stellung "R". Die beschriebenen motorseitigen und bremsenseitigen Eingriffe sind unabhängig von der Wählhebelposition wirksam. Das Automatgetriebe 2 verbleibt hydraulisch im Rückwärtsgang, mindestens solange kein Systemreset durch Abschalten des Zündstromes durchgeführt wird.

### Bezugszeichen

- 1: Getriebe-/Motorsteuerung
- 2: Automatgetriebe
- 3: Warneinrichtung, Programmodul
- 4: Positionserkennungseinrichtung
- 5: Wählhebel
- 6: getriebeunabhängige Rechnereinheit
- 7: Motorsteuerung, Digitale Motorelektronik (DME)
- 8: CAN(Controller Area Network)-Datenbus
- 8A: Signalleitung
- 9: elektronisches Getriebesteuergerät (EGS)
- 10: Steuereinrichtung einer Fahrzeugbremse
- 11: Fahrzeugbremssystems, Anti-Blockier-System (ABS)
- 12: Arretierungseinrichtung
- P: Parken
- R: Rückwärtsfahrt
- N: Neutral
- D: Vorwärtsfahrt, Drive
- I: Vorwärtsfahrt
- II: Vorwärtsfahrt
- III: Vorwärtsfahrt
- IV: Vorwärtsfahrt

## Patentansprüche

1. Getriebe-/Motorsteuerung für ein Kraftfahrzeug mit einem Automatgetriebe, welche eine Warneinrichtung für eine Störung einer Signalübertragung von einer elektrischen Positionserkennungseinrichtung eines Wählhebels, mittels dem von einem Fahrer mehrere Getriebeschaltstellungen (P, R, N, D, I, II, III, IV) anwählbar sind, über eine Elektronische Getriebesteuerung an Steuermittel des Automatgetriebes aufweist, **dadurch gekennzeichnet, daß** die Warneinrichtung (3) zur Anzeige, daß keine Fahrtrichtungsänderung durchführbar ist, mit einem Programmodul einer getriebeunabhängigen Rechnereinheit (6) ausgebildet ist, welche bei der Störung der Signalübertragung in einem Notfahrbetrieb des Automatgetriebes (2) und Erkennen einer Fahrzeuggeschwindigkeit, die kleiner als ein Grenzwert ist, an ein Programmodul einer Motorsteuerung (7) ein maximal zulässiges Motormoment und/oder eine maximal zulässige Motordrehzahl und/oder eine maximal zulässige Fahrzeuggeschwindigkeit für den Notfahrbetrieb ausgibt.

2. Getriebe-/Motorsteuerung für ein Kraftfahrzeug mit einem Automatgetriebe, welche eine Warneinrichtung für eine Störung einer Signalübertragung von einer elektrischen Positionserkennungseinrichtung eines Wählhebels, mittels dem von einem Fahrer mehrere Getriebeschaltstellungen (P, R, N, D, I, II, III, IV) anwählbar sind, über eine Elektronische Getriebesteuerung an Steuermittel des Automatgetriebes aufweist, **dadurch gekennzeichnet, daß** die Warneinrichtung (3) zur Anzeige, daß keine Fahrtrichtungsänderung durchführbar ist, mit einem Programmodul einer getriebeunabhängigen Rechnereinheit (6) ausgebildet ist, welche bei der Störung der Signalübertragung in einem Notfahrbetrieb des Automatgetriebes (2) und Erkennen einer Fahrzeuggeschwindigkeit, die kleiner als ein Grenzwert ist, an ein Programmodul einer Steuereinrichtung (10) einer Fahrzeugbremse ein Signal zur Aktivierung der Fahrzeugbremse ausgibt.

3. Getriebe-/Motorsteuerung für ein Kraftfahrzeug mit einem Automatgetriebe, welche eine Warneinrichtung für eine Störung einer Signalübertragung von einer elektrischen Positionserkennungseinrichtung eines Wählhebels, mittels dem von einem Fahrer mehrere Getriebeschaltstellungen (P, R, N, D, I, II, III, IV) anwählbar sind, über eine Elektronische Getriebesteuerung an Steuermittel des Automatgetriebes aufweist, **dadurch gekennzeichnet, daß** die Warneinrichtung (3) zur Anzeige, daß keine Fahrtrichtungsänderung durchführbar ist, mit einer Arretierungseinrichtung (12) ausgebildet ist, die den Wählhebel (5) bei Eintritt der Störung der Signalübertragung in einem Notfahrbetrieb des Automatgetriebes (2) in seiner aktuellen Stellung blockiert.

4. Getriebe-/Motorsteuerung für ein Kraftfahrzeug mit einem Automatgetriebe, welche eine Warneinrichtung für eine Störung einer Signalübertragung von einer elektrischen Positionserkennungseinrichtung eines Wählhebels, mittels dem von einem Fahrer mehrere Getriebeschaltstellungen (P., R, N, D, I, II, III, IV) anwählbar sind, über eine Elektronische Getriebesteuerung an Steuermittel des Automatgetriebes aufweist, **dadurch gekennzeichnet, daß** die Warneinrichtung (3) mit einer optischen oder akustischen Hinweiseinrichtung ausgebildet ist, welche dem Fahrer bei Eintritt der Störung der Signalübertragung in einem Notfahrbetrieb des Automatgetriebes (2) ein optisches oder akustisches, eindeutiges Signal gibt, daß eine Fahrtrichtungsänderung nicht mehr möglich ist.

5. Getriebe-/Motorsteuerung nach einem der Ansprüche 1 bis 4, **dadurch gekennzeichnet, daß** der Notfahrbetrieb bei einer Störung und/oder einem Ausfall eines elektronischen Getriebesteuergerätes (9) und/oder eines CAN-Datenbusses (8) und/oder der Positionserkennungseinrichtung (4) des Wählhebels (5) erkannt wird.

6. Getriebe-/Motorsteuerung nach einem der Ansprüche 1 bis 5, **dadurch gekennzeichnet, daß** der Notfahrbetrieb erkannt wird, wenn von der Warneinrichtung (3) ein Fehlen eines einen Normalbetrieb anzeigenden Ausgangssignales des elektronischen Getriebesteuergerätes (9) erkannt wird.

7. Getriebe-/Motorsteuerung nach einem der Ansprüche 1 bis 6, **dadurch gekennzeichnet, daß** die Warneinrichtung (3) wenigstens für eine bestimmte Zeit nach Eintritt der Störung und des Notfahrbetriebes aktiviert ist.

8. Getriebe-/Motorsteuerung nach einem der Ansprüche 1 bis 7, **dadurch gekennzeichnet, daß** die getriebeunabhängige Rechnereinheit (6), in welche das Programmodül der Warneinrichtung (3) integriert ist, ein separater Rechner oder ein Rechner der Motorsteuerung (7) oder ein Rechner der Steuereinrichtung (10) der Fahrzeugbremse ist.

9. Getriebe-/Motorsteuerung nach einem der Ansprüche 1 bis 8, **dadurch gekennzeichnet, daß** das maximale Motormoment und/oder die maximale Motordrehzahl oder die Bremswirkung der Fahrzeugbremse derart vorgesehen ist, daß die Fahrzeuggeschwindigkeit bei einem Anfahren in dem Notbetrieb maximal einer Kriechgeschwindigkeit entspricht.

10. Getriebe-/Motorsteuerung nach einem der Ansprüche 2 bis 9, **dadurch gekennzeichnet, daß** die Fahrzeugbremse elektrisch angesteuert ist.

11. Getriebe-/Motorsteuerung nach einem der Ansprüche 3 bis 10, **dadurch gekennzeichnet, daß** die Arretierungseinrichtung (12) als ein Magnet ausgebildet ist, welcher den Wählhebel (5) stromführend oder stromlos in seiner aktuellen Stellung blockiert.

## Claims

1. Transmission/engine control system for a motor vehicle with an automatic transmission, which comprises a warning device for a malfunction in a signal transmission from an electrical position detection device of a selector lever, by means of which a plurality of gearshift positions (P, R, N, D, I, II, III, IV) can be selected by a driver, via an electronic transmission control system to control means of the automatic transmission, **characterised in that**, in order to indicate that no change in the direction of travel can be carried out, the warning device (3) is formed with a program module of a transmission-independent computer unit (6) which, upon the occurrence of the malfunction in the signal transmission when the automatic transmission (2) is in an emergency driving mode and detection of a vehicle speed which is lower than a limit value, delivers a maximum permissible engine torque and/or a maximum permissible engine speed and/or a maximum permissible vehicle speed for the emergency driving mode to a program module of an engine control system (7).

2. Transmission/engine control system for a motor vehicle with an automatic transmission, which comprises a warning device for a malfunction in a signal transmission from an electrical position detection device of a selector lever, by means of which a plurality of gearshift positions (P, R, N, D, I, II, III, IV) can be selected by a driver, via an electronic transmission control system to control means of the automatic transmission, **characterised in that**, in order to indicate that no change in the direction of travel can be carried out, the warning device (3) is formed with a program module of a transmission-independent computer unit (6) which, upon the occurrence of the malfunction in the signal transmission when the automatic transmission (2) is in an emergency driving mode and detection of a vehicle speed which is lower than a limit value, delivers to a program module of a control device (10) of a vehicle brake a signal for activating the vehicle brake.

3. Transmission/engine control system for a motor vehicle with an automatic transmission, which comprises a warning device for a malfunction in a signal transmission from an electrical position detection device of a selector lever, by means of which a plurality of gearshift positions (P, R, N, D, I, II, III, IV) can be selected by a driver, via an electronic transmission control system to control means of the automatic transmission, **characterised in that**, in order to indicate that no change in the direction of travel can be carried out, the warning device (3) is formed with a locking device (12), which locks the selector lever (5) in its actual position upon the occurrence of the malfunction in the signal transmission when the automatic transmission (2) is in an emergency driving mode.

4. Transmission/engine control system for a motor vehicle with an automatic transmission, which comprises a warning device for a malfunction in a signal transmission from an electrical position detection device of a selector lever, by means of which a plurality of gearshift positions (P, R, N, D, I, II, III, IV) can be selected by a driver, via an electronic transmission control system to control means of the automatic transmission, **characterised in that** the warning device (3) is formed with a visual or an acoustic indicator device which, upon the occurrence of a malfunction of the signal transmission when the automatic transmission (2) is in an emergency driving mode, delivers to the driver a visual or an acoustic, clear signal that a change in the direction of travel is no longer possible.

5. Transmission/engine control system according to any one of Claims 1 to 4, **characterised in that** the emergency driving mode is detected upon the occurrence of a malfunction and/or failure of an electronic transmission control mechanism (9) and/or a CAN data bus (8) and/or the position detection device (4) of the selector lever (5).

6. Transmission/engine control system according to any one of Claims 1 to 5, **characterised in that** the emergency driving mode is detected when the warning device (3) detects the absence of an output signal of the electronic transmission control mechanism (9) which indicates a normal operating mode.

7. Transmission/engine control system according to any one of Claims 1 to 6, **characterised in that** the warning device (3) is activated at least for a certain time following the occurrence of the malfunction and of the emergency driving mode.

8. Transmission/engine control system according to any one of Claims 1 to 7, **characterised in that** the transmission-independent computer unit (6), in which the program module of the warning device (3) is integrated, is a separate computer or a computer of the engine control system (7) or a computer of the control device (10) of the vehicle brake.

9. Transmission/engine control system according to any one of Claims 1 to 8, **characterised in that** the maximum engine torque and/or the maximum engine speed or the braking action of the vehicle brake is/are determined such that the vehicle speed corresponds at most to a crawling speed when starting in the emergency mode.

10. Transmission/engine control system according to any one of Claims 2 to 9, **characterised in that** the vehicle brake is electrically actuated.

11. Transmission/engine control system according to any one of Claims 3 to 10, **characterised in that** the locking device (12) is formed as a magnet which blocks the selector lever (5) in its actual position in the current-carrying or currentless state.

## Revendications

1. Commande de boîte de vitesses/moteur pour un véhicule automobile équipé d'une boîte de vitesses automatique, qui comporte un dispositif avertisseur d'une perturbation de la transmission du signal d'un dispositif électrique de détection de la position d'un levier sélecteur, au moyen duquel plusieurs positions de commutation de la boîte de vitesses (P, R, N, D, I, II_{,} III_{,} IV) peuvent être sélectionnées par un conducteur, à des moyens de commande de la boîte de vitesses automatique, par l'intermédiaire d'une commande électronique de boîte de vitesses, **caractérisée en ce que** le dispositif avertisseur (3), destiné à indiquer qu'aucune modification du sens de la marche ne peut être exécutée, est réalisé avec un module de programme d'une unité de calculateur (6) indépendante de la boîte de vitesses et qui, lors de la perturbation de la transmission du signal dans un fonctionnement de conduite de détresse de la boîte de vitesses automatique (2) et de la détection d'une vitesse du véhicule qui est inférieure à une vitesse limite, transmet à un module de programme d'une commande de moteur (7), un couple moteur maximal admissible et/ou une vitesse de rotation maximale admissible du moteur et/ou une vitesse maximale admissible du véhicule pour le fonctionnement de conduite de détresse.

2. Commande de boîte de vitesses/moteur pour un véhicule automobile équipé d'une boîte de vitesses automatique, qui comporte un dispositif avertisseur d'une perturbation de la transmission du signal d'un dispositif électrique de détection de la position d'un levier sélecteur, au moyen duquel plusieurs positions de commutation de la boîte de vitesses (P, R, N, D, I, II, III. IV) peuvent être sélectionnées par un conducteur, à des moyens de commande de la boîte de vitesses automatique, par l'intermédiaire d'une commande électronique de boîte de vitesses, **caractérisée en ce que** le dispositif avertisseur (3), destiné à indiquer qu'aucune modification du sens de la marche ne peut être exécutée, est réalisé avec un module de programme d'une unité de calculateur (6) indépendante de la boîte de vitesses et qui, lors de la perturbation de la transmission du signal dans un fonctionnement de conduite de détresse de la boîte de vitesses automatique (2) et de la détection d'une vitesse du véhicule qui est inférieure à une vitesse limite, transmet à un module de programme d'un dispositif de commande (10) d'un frein du véhicule un signal pour l'activation du frein du véhicule.

3. Commande de boîte de vitesses/moteur pour un véhicule automobile équipé d'une boîte de vitesses automatique, qui comporte un dispositif avertisseur d'une perturbation de la transmission du signal d'un dispositif électrique de détection de la position d'un levier sélecteur, au moyen duquel plusieurs positions de commutation de la boîte de vitesses (P, R, N, D, I, II, III, IV) peuvent être sélectionnées par un conducteur, à des moyens de commande de la boîte de vitesses automatique, par l'intermédiaire d'une commande électronique de boîte de vitesses, **caractérisée en ce que** le dispositif avertisseur (3), destiné à indiquer qu'aucune modification du sens de la marche ne peut être exécutée, est réalisé avec un dispositif de verrouillage (12) qui bloque le levier sélecteur (5) dans sa position actuelle lorsque la perturbation de la transmission du signal apparaît dans un fonctionnement de conduite de détresse de la boîte de vitesses automatique (2).

4. Commande de boîte de vitesses/moteur pour un véhicule automobile équipé d'une boîte de vitesses automatique, qui comporte un dispositif avertisseur d'une perturbation de la transmission du signal d'un dispositif électrique de détection de la position d'un levier sélecteur, au moyen duquel plusieurs positions de commutation de la boîte de vitesses (P, R, N, D, I, II, III, IV) peuvent être sélectionnées par un conducteur, à des moyens de commande de la boîte de vitesses automatique, par l'intermédiaire d'une commande électronique de boîte de vitesses, **caractérisée en ce que** le dispositif avertisseur (3) est réalisé avec un dispositif de signalisation optique ou acoustique qui transmet au conducteur, lors de l'apparition de la perturbation de la transmission du signal dans un fonctionnement de conduite en détresse de la boîte de vitesses automatique (2), un signal univoque optique ou acoustique indiquant qu'il n'est plus possible d'effectuer une modification du sens de la marche.

5. Commande de boîte de vitesses/moteur selon l'une des revendications 1 à 4, **caractérisée en ce que** le fonctionnement de conduite de détresse est détecté en présence d'une perturbation et/ou d'une défaillance d'un appareil électronique (9) de commande de boîte de vitesses et/ou d'un bus de données CAN (8) et/ou du dispositif (4) de détection de la position du levier sélecteur (5).

6. Commande de boîte de vitesses/moteur selon l'une des revendications 1 à 5, **caractérisée en ce que** le fonctionnement de conduite de détresse est détecté lorsque le dispositif avertisseur (3) détecte une absence d'un signal de sortie de l'appareil électronique (9) de commande de la boîte de vitesses indiquant un fonctionnement normal.

7. Commande de boîte de vitesses/moteur selon l'une des revendications 1 à 6, **caractérisée en ce que** le dispositif avertisseur (3) est activé au moins pendant un certain temps après l'apparition de la perturbation et du fonctionnement de conduite de détresse.

8. Commande de boîte de vitesses/moteur selon l'une des revendications 1 à 7, **caractérisée en ce que** l'unité de calculateur (6) indépendante de la boîte de vitesses, dans laquelle le module de programme du dispositif avertisseur (3) est intégré, est un calculateur séparé ou un calculateur de la commande (7) du moteur ou un calculateur du dispositif (10) de commande du frein du véhicule.

9. Commande de boîte de vitesses/moteur selon l'une des revendications 1 à 8, **caractérisée en ce que** le couple moteur maximal et/ou la vitesse de rotation maximale du moteur, ou l'effet de freinage du frein du véhicule est ou sont prévu(s) de manière que la vitesse du véhicule corresponde au maximum à une vitesse de marche rampante lors d'un démarrage dans le fonctionnement de conduite de détresse.

10. Commande de boîte de vitesses/moteur selon l'une des revendications 2 à 9, **caractérisée en ce que** le frein du véhicule est commandé électriquement.

11. Commande de boîte de vitesses/moteur selon l'une des revendications 3 à 10, **caractérisée en ce que** le dispositif de verrouillage (12) est constitué par un aimant qui bloque le levier sélecteur (5) dans sa position actuelle en conduisant un courant ou sans courant.
